# EUROPÄISCHE PATENTSCHRIFT

(11) **EP 1 661 765 B1**
(45) Veröffentlichungstag und Bekanntmachung des Hinweises auf die Patenterteilung: **01.10.2008**
(21) Anmeldenummer: 05025303.8
(22) Anmeldetag: 19.11.2005
(51) Int. Cl.: B60R 19/18

(54) **Kraftfahrzeug mit einem Stossfänger**
Motor vehicle with bumper
Véhicule automobile avec pare-chocs

(30) Priorität: 26.11.2004 DE 102004057173
(43) Veröffentlichungstag der Anmeldung: 31.05.2006
(73) Patentinhaber: AUDI AG, 85045 Ingolstadt (DE)
(72) Erfinder: Schmidt, Michael, 80687 München (DE)
(74) Vertreter: Engelhardt, Harald

(56) Entgegenhaltungen:
- DE-A1- 2 825 838
- DE-A1- 10 314 021
- US-A1- 2002 089 197
- PATENT ABSTRACTS OF JAPAN Bd. 1996, Nr. 05, 31. Mai 1996 (1996-05-31) -& JP 08 002353 A (NISSAN MOTOR CO LTD), 9. Januar 1996 (1996-01-09)

## Beschreibung

Die Erfindung bezieht sich auf ein Kraftfahrzeug mit einem Stossfänger dessen Träger einen Stossfängerüberzug aufnimmt, wobei Maßnahmen getroffen sind, dass bei einem Aufprall auf den Stoßfänger bis zu einem bestimmten Kraftniveau der Stoßfängerüberzug keine angrenzenden Bauteile beschädigt.

Gattungsgemäße Anordnungen sind bei Personenkraftwagen bekannt und werden dort eingesetzt, wo zwischen dem Stoßfängerüberzug und den sich anschließenden Karosseriebauteilen keine erkennbare Fuge verbleiben soll. Dadurch, dass das Karosserieteil bzw. das Anbauteil den Randbereich des Stoßfängerüberzugs übergreift, können Toleranzen ausgeglichen werden. Je nach den vorhandenen baulichen Gegebenheiten ist es auch möglich, dass sich der Stoßfängerüberzug um einen gewissen Betrag auf das Karosserieteil / Anbauteil zu bewegen kann. Um Baulänge zu sparen, ist dafür jedoch meist kein oder nur wenig Platz vorhanden. Dies führt dazu, dass bereits bei sehr geringen Aufprallgeschwindigkeit der obere Rand des Stoßfängerüberzugs an den angrenzenden Bauteilen anstößt und diese beschädigt. Dabei können nicht nur Bauteile beschädigt werden die in Kraftrichtung liegen, sondern beispielsweise auch Bauteile, die über dem oberen Randbereich des Stoßfängerüberzugs angeordnet sind. Wenn sich der Stoßfängerüberzug nicht frei in Kraftrichtung bewegen kann und anstößt, dann wölbt er sich meist nach oben. Dabei kann er dann beispielsweise auf den unteren Rand einer Heckklappe einwirken und die Heckklappe verformen. Dieses Verhalten hat hohe Reparaturkosten auch bei einem kleinen Aufprall zur Folge und verschlechtert dadurch die Typklasseneinstufung des Fahrzeuges.

Bei einer aus der DE 28 25 838 A1 bekannten Stoßfängeranordnung kann sich der karosserienahe Randbereich des Stoßfängerüberzugs bei einem Aufprall nach innen hin abbiegen und an dem anschließendem Karosseriebauteil entlang gleiten. In Abhängigkeit von der Aufprallrichtung ist es jedoch auch möglich, dass sich der Randbereich des Stoßfängerüberzugs an der Außenseite des Karosseriebauteil entlang schiebt. In der Ausgangslage ist zwischen dem Stoßfängerüberzug und dem angrenzendem Karosseriebauteil ein von außen sichtbarer Spalt vorgesehen.

Die in der US 2002/089197 A1 gezeigte und beschriebene Lösung lässt ebenfalls eine Relativverschiebung zwischen Stoßfängerüberzug und Karosserie zu, wobei Maßnahmen getroffen sind, um die bei einem leichteren Aufprall auftretenden Kräfte zu absorbieren. Der entsprechende Randbereich des Stoßfängerüberzugs ist von dem sich anschließenden Karosseriebauteil beabstandet.

Der vorliegenden Erfindung liegt die Aufgabe zugrunde, mit einfachen Mitteln einen optisch ansprechenden Anschluss des Stoßfängerüberzugs an die Karosserie ohne erkennbare Fuge zu schaffen und gleichzeitig eine Beschädigung der Karosserie durch einen Aufprall den Stoßfängerüberzug bis zu einer vorbestimmten Größenordnung auszuschließen.

Die Aufgabe wird durch die Merkmale des Patentanspruchs 1 gelöst. Durch die erfindungsgemäße Lösung wird bei Realisierung einer von außen nicht wahrnehmbaren Fuge, sichergestellt, dass durch die Umlenkung des Randbereichs der Stoßfänger selbst bei ungünstigen Platzverhältnissen weiter auf die Karosserie zu bewegt werden kann, ohne dass der Randbereich des Stoßfängerüberzugs ein angrenzendes Bauteil beschädigt. Da sich durch die erfindungsgemäße Ausbildung der Randbereich des Stoßfängerüberzugs auch nicht mehr nach oben wölben und eine dort vorhandene Klappe beschädigen kann, ist die vorgeschlagene Anordnung besonders vorteilhaft bei Heckstoßfängern einsetzbar.

In einfacher Ausgestaltung kann der Randbereich des Stoßfängerüberzugs bei einem Aufprall durch ein Karosserieteil (Blechteil), wie beispielsweise durch ein Heckabschlussblech, abgelenkt werden. Meist bietet es sich jedoch an, ein ohnehin vorhandenes Anbauteil entsprechend der Erfindung auszugestalten. Ein solches Anbauteil kann beispielsweise ein Kunststoffprofil sein, welches an der Fahrzeugkarosserie festgelegt ist und an der Oberseite des Randbereichs des Stoßfängerüberzugs anliegt. Das Anbauteil ist als Winkelprofil ausgebildet, wobei der erste Schenkel des Winkelprofils an der Oberseite des Stoßfängerüberzugs anliegt und wobei sich der zweite Schenkel mit einem Radius an den ersten Schenkel anschließt und eine Gleitfläche für den Randbereich des Stoßfängerüberzugs bei einem Aufprall bildet. Ein derartiges Winkelprofil kann in einfacher Weise so gestaltet werden, dass eine zuverlässige Umlenkung des Randbereichs des Stossfängerüberzugs erreicht wird und dieser ungehindert in die neue Richtung geführt werden kann.

Gemäß der Erfindung weist das Winkelprofil einen in Einbaulage nach oben gerichteten Fortsatz auf, dessen Endbereich von einem Kederteil oder einer Dichtung umgriffen wird. Dies stellt nicht nur eine optisch besonders ansprechende Lösung dar, bei der kein Spalt zwischen den Bauteilen erkennbar ist, sondern bildet auch eine einfache, zuverlässige und kostengünstige Befestigung des Winkelprofils.

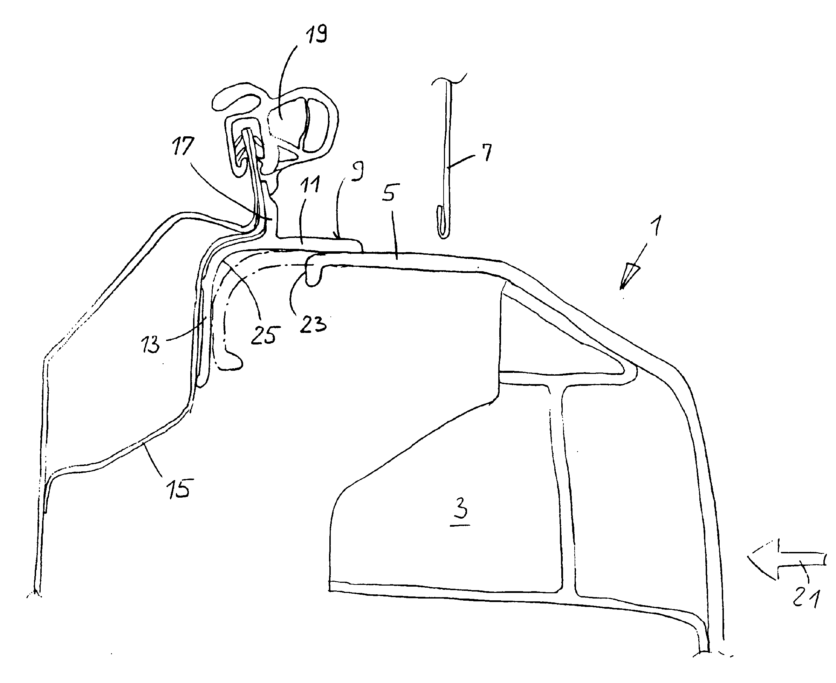

Ein Ausführungsbeispiel der Erfindung ist in der Zeichnung dargestellt und wird nachfolgend näher beschrieben.

Die Zeichnung zeigt einen vertikalen Schnitt durch den oberen Abschnitt eines Stossfängerüberzuges 1 und die angrenzenden Bauteile.

Der Stossfängerüberzug 1 umfasst einen etwa horizontal verlaufenden Randbereich 5 und ein innen anliegendes Schließteil 3. Über dem Randbereich 5 ist in geringem Abstand der untere Abschluss einer Heckklappe 7 angedeutet. Der Randbereich 5 des Stossfängerüberzugs 1 wird teilweise von einem Anbauteil übergriffen, welches durch ein Winkelprofil 9 gebildet ist.

Im Einzelnen weist das aus Kunststoff hergestellte Winkelprofil 9 einen ersten Schenkel 11 auf, welcher auf der Oberseite des Randbereichs 5 des Stossfängerüberzugs 1 aufliegt. Der zweite Schenkel 13 des Winkelprofils 9 liegt an einem Heckabschlussblech 15 an und ist an diesem durch in der Zeichnung nicht dargestellte Schrauben befestigt. Außerdem weist das Winkelprofil 9 noch einen Fortsatz 17 auf, welcher sich etwa rechtwinklig von dem ersten Schenkel 11 nach oben erstreckt und teilweise von einer Dichtung 19 umschlossen ist.

Wenn nun bei einem Aufprall auf den Stossfängerüberzug 1 in Richtung des Pfeils 21 eine ausreichend große Kraft einwirkt, dann bewegt sich der Stossfängerüberzug 1 in Richtung auf das Heckabschlussblech 15 zu. Dabei wird der Randbereich 5 des Stossfängerüberzugs 1 zunächst an der Unterseite eines Schenkels 11 entlang geführt bis die Fläche 23 des Randbereichs an dem nach unten weisenden zweiten Schenkel 13 des Winkelprofils 9 anstößt. Durch den Radius 25 zwischen dem ersten Schenkel 11 und dem zweiten Schenkels 13 des Winkelprofils 9 wird der Randbereich 5 des Stossfängerüberzugs 1 nach unten gedrückt und nimmt dann eine Stellung ein, wie sie beispielsweise strichpunktiert in der Zeichnung wiedergegeben ist.

Dadurch, dass der Randbereich 5 des Stossfängerüberzugs 1 abgebogen wird und anschließend an dem zweiten Schenkel 13 des Winkelprofils 9 nach unten abgleitet, wird vermieden, dass das Heckabschlussblech 15 beschädigt wird. Es ist aber auch ausgeschlossen, dass sich der Randbereich 5 des Stossfängerüberzugs 1 nach oben wölbt und die Heckklappe 7 verformt.

## Patentansprüche

1. Kraftfahrzeug mit einem Stoßfänger, dessen Träger einen Stoßfängerüberzug (1) aufnimmt, wobei der obere, sich in Fahrzeugquerrichtung erstreckende Randbereich (5) des Stoßfängerüberzugs (1) unter einem Karosserieteil oder einem mit diesem verbundenen Anbauteil endet und der Randbereich (5) des Stoßfängerüberzugs (1) mit seiner Oberseite an dem Karosserieteil/Anbauteil anliegt, wobei der Randbereich (5) und das Karosserieteil/Anbauteil so ausgebildet sind, dass bei einer durch einen Aufprall bedingten Verschiebung des Stoßfängerüberzugs (1) in Richtung auf das Karosserieteil/Anbauteil zu der Randbereich des Stoßfängerüberzugs (1) abgebogen wird und an dem Karosserieteil/Anbauteil entlang gleitet und wobei das Anbauteil ein Winkelprofil (9) ist, dessen erster Schenkel (11) an der Oberseite des Stoßfängerüberzugs (1) anliegt und dessen zweiter, in der Einbaulage nach unten weisender, an einem Karosserieteil anliegender und mit diesem verbundener Schenkel (13) sich mit einem Radius (25) an den ersten Schenkel (11) anschließt und eine Gleitfläche für den Randbereich (5) des Stoßfängerüberzugs (1) bei einem Aufprall bildet und wobei das Winkelprofil (9) einen in Einbaulage nach oben gerichteten Fortsatz (17) aufweist dessen Endbereich von einem Kederteil oder einer Dichtung (19) umgriffen wird.

2. Kraftfahrzeug nach Anspruch 1, **dadurch gekennzeichnet, dass** das Winkelprofil (9) ein Kunststoffteil ist, welches zu seiner Befestigung mit Aussparungen und/oder Rastelementen versehen ist.

## Claims

1. Motor vehicle with a bumper the supporting means of which takes up a bumper cover (1), whereby the upper rim area (5) of the bumper cover (1) that extends in the transverse direction of the vehicle ends below a section of the vehicle body or an attachment connected to the vehicle body, and, with its upper rim, lies on the vehicle body or attachment to it, whereby the rim area (5) and the vehicle body or attachment to it are formed such that, in the event of a shift in the bumper cover (1) caused by a collision, the bumper cover (1) is bent off and slides along the vehicle body or attachment to it, and whereby the attachment is an angle section (9), the first sidepiece (11) of which lies on the upper side of the bumper cover (1) and the second sidepiece (13), which points downwards and lies on a section of the vehicle body and is connected to it when mounted, adjoins the first sidepiece (11), forming a sliding surface for the rim area (5) of the bumper cover (1) in the event of a collision, and whereby the angle section (9) has a projection (17) that, when mounted, points upwards, the end area of the said projection (17) being enclosed by a weather-strip or seal (19).

2. Motor vehicle in accordance with claim 1, **characterized in that** the angle section (9) is a plastic part that has recesses and/or locking elements for its attachment.

## Revendications

1. Véhicule automobile doté d'un pare-chocs, dont le support loge un revêtement de pare-chocs (1), la zone de bord (5) du revêtement de pare-chocs (1) s'étendant dans la direction transversale du véhicule terminant sous une pièce de carrosserie ou une pièce ajoutée reliée à celle-ci et la zone de bord (5) du revêtement de pare-chocs (1) reposant avec sa face supérieure contre la pièce de carrosserie/la pièce ajoutée, la zone de bord (5) et la pièce de carrosserie/la pièce à ajouter étant conçues de sorte que dans le cas d'un déplacement du revêtement de pare-chocs (1), provoqué par une collision, en direction de la pièce de carrosserie/pièce ajoutée, la zone de bord du revêtement de pare-chocs (1) est courbée et glisse le long de la pièce de carrosserie/pièce ajoutée et la pièce ajoutée étant une cornière (9) dont la première branche (1) repose contre la face supérieure du revêtement de pare-chocs (1) et dont la seconde branche (13) orientée vers le bas dans la position de montage, reposant contre une pièce de carrosserie et reliée à celle-ci se raccorde avec un rayon (25) à la première branche (11) et forme une surface de glissement pour la zone de bord (5) du revêtement de pare-chocs dans le cas d'une collision et la cornière (9) comprenant un prolongement (17) orienté vers le haut dans la position de montage dont la zone d'extrémité est entourée par une pièce de bourrelet ou un joint (19).

2. Véhicule automobile selon la revendication 1, **caractérisé en ce que** la cornière (9) est une pièce en matière plastique, laquelle est pourvue en vue de sa fixation d'évidements et/ou d'éléments d'encliquetage.
